# EUROPÄISCHE PATENTANMELDUNG

(11) **EP 1 920 687 A2**
(43) Veröffentlichungstag der Anmeldung: **14.05.2008**
(21) Anmeldenummer: 07021708.8
(22) Anmeldetag: 08.11.2007
(51) Int. Cl.: A47J 37/04

(54) **Vorrichtung zur Aufnahme und Führung von Grillgut für einen Senkrecht-Grill**

(30) Priorität: 10.11.2006 DE 102006053403
(71) Anmelder: Bikas, Giorgios, 52146 Würselen (DE); Kordilis, Theodoros, 48155 Münster (DE); Varlangas, Panagiotis, 40591 Düssdorf (DE); Vonhoegen, Stefan, 52146 Würselen (DE)
(72) Erfinder: Bikas, Giorgios, 52146 Würselen (DE); Kordilis, Theodoros, 48155 Münster (DE); Varlangas, Panagiotis, 40591 Düssdorf (DE); Vonhoegen, Stefan, 52146 Würselen (DE)
(74) Vertreter: Schrooten, Rolf

(57) **Zusammenfassung**

Die Erfindung betrifft eine Vorrichtung zur Aufnahme und Führung von Grillgut (4), die geeignet ist, an einem Senkrecht-Grill (2) mit einer um eine senkrechte Achse rotierenden Stange (3) derart montiert zu werden, dass das Grillgut (4) an der Heizeinrichtung (5) des Senkrecht-Grills (2) vorbeiführbar ist, wobei die Vorrichtung (1) folgendes umfasst:
- eine Trägereinheit (8) mit Befestigungsmitteln (13) zur drehfesten Befestigung an der rotierenden Stange (3) des Senkrecht-Grills (2);
- mindestens zwei Spieße (6) mit jeweils einem Aufnahmebereich zur Aufnahme von Grillgut (4), die jeweils um ihre Längsachse drehbar von der Trägereinheit (8) getragen sind;
- ein Spießantriebselement (11), das relativ zur Trägereinheit (8) frei drehbar ist, und das Montagemittel (14, 15) zur Befestigung an einem feststehenden Teil (16) des Senkrecht-Grills (2) oder an einem relativ zum Senkrecht-Grill (2) feststehenden Teil aufweist; und
- Getriebemittel (12), durch die die Spieße (6) bei einer Drehung der Trägereinheit (8) relativ zum Spießantriebselement (11) in eine kontinuierliche Drehbewegung um ihre eigene Längsachse antreibbar sind.

## Beschreibung

Die vorliegende Erfindung betrifft eine universell einsetzbare Vorrichtung zum Aufnehmen und Führen von Grillgut, insbesondere von Fleisch- und/oder Wurstwaren, die geeignet ist, an einem Senkrecht-Grill mit einer um eine vertikale Achse rotierenden Stange derart montiert zu werden, dass die das Grillgut bildenden Lebensmittel zum Grillen an der Heizeinrichtung des Senkrecht-Grills vorbei geführt werden.

Senkrecht-Grilleinrichtungen sind insbesondere zum Grillen von Fleisch, insbesondere von Gyrosspießen oder Döner-Kebap bekannt. Dabei rotiert das Grillgut auf einem senkrecht gelagerten Spieß vor der Hitzequelle des Grills, um von allen Seiten gleichmäßig gegart und gebräunt zu werden, wobei es keinen direkten Kontakt mit dem Heizelement hat. Gleichzeitig ist durch das abwechselnde Erhitzen und Abkühlen ein spezieller Geschmackseffekt des Grillgutes erreichbar.

Außerdem ist mit Waagerecht-Grilleinrichtungen noch eine andere Bauart von Grillgeräten bekannt, bei der eine Mehrzahl von waagerecht angeordneten Grillspießen um eine gemeinsame horizontal ausgerichtete Achse gedreht werden. Derartige Grillgeräte werden insbesondere zum Grillen von Hähnchen verwendet.

Die vorgenannten Grillgeräte werden vor allem im professionellen Bereich, insbesondere in Restaurants oder im lmbiss-Bereich eingesetzt. Daneben gibt es jedoch auch wesentlich kleinere Ausführungsformen, die als Tischgeräte im privaten Bereich Anwendung finden.

Ferner sind im Bereich von Senkrecht-Grillgeräten auch Ausführungsformen bekannt, bei denen eine Mehrzahl von jeweils mit Grillgut bestückten Spießen frei drehbar in einer Trägereinheit gelagert sind, welche um eine gemeinsame vertikale Achse rotiert. Die einzelnen Spieße drehen sich dabei nicht kontinuierlich um ihre eigene Längsachse, sondern sie sind jeweils mit drei oder vier Vorsprüngen versehen, die bei einer Drehung der Trägereinheit an einem feststehenden Anschlagelement anschlagen, so dass nur dann eine abschnittsweise Verdrehung der einzelnen Spieße erfolgt, wenn diese an dem feststehenden Anschlagelement vorbei bewegt werden.

Ein wesentlicher Nachteil derartiger Systeme besteht darin, dass hierdurch trotz einer relativ großen freien Oberfläche nur eine sehr ungleichmäßige Bewegung des Grillgutes erreicht wird, wobei sogar bestimmte Umfangsbereiche des Grillgutes zu keiner Zeit des Grillvorganges radial nach außen weisen und somit nie direkt der Heizeinrichtung des Grillgerätes gegenüber liegen. Dadurch wird nicht nur der gewünschte spezielle Geschmackseffekt beeinträchtigt, sondern es kann vor allem eine gleichmäßige und zuverlässige Garung des gesamten Grillgutes nicht sicher gewährleistet werden.

Aus der Druckschrift DE 198 36 839 A1 ist ferner ein industrielles Grillgerät mit vertikal geführten drehbaren Grillspießen bekannt, die mittels einer Trägervorrichtung um einen nicht rotierenden, feststehenden Zentralstab gedreht werden. Die Drehbewegung dieser Grillvorrichtung wird über eine Antriebseinrichtung herbeigeführt, die mit dem oberen Element der Trägereinheit verbunden ist, welches drehbar auf dem feststehenden Zentralstab gelagert ist.

Zwar wird bei diesem Grillgerät eine kontinuierliche und gleichmäßige Rotationsbewegung sämtlicher Grillspieße erreicht, jedoch ist hierfür stets eine vollständig nur zu diesem Zweck hergestellte Vorrichtung erforderlich, was mit entsprechend hohen Kosten verbunden ist. Ein nachträglicher Anbau an herkömmliche Senkrecht-Grillgeräte mit einer rotierenden Zentralstange ist hierbei nicht möglich.

Auch aus der DE 32 14 817 C2 ist eine Grillvorrichtung in der Form eines eigenständigen Rotationsgrillgeräts bekannt, das eine vollständig nur zu diesem Zweck hergestellte Vorrichtung darstellt, die ebenfalls mit entsprechend hohen Kosten verbunden ist. Ein nachträglicher Anbau an herkömmliche Senkrecht-Grillgeräte mit einer rotierenden Zentralstange, deren Drehung gleichzeitig auch für den Antrieb der einzelnen Spieße genutzt wird, ist ebenso wie bei der zuvor genannten DE 198 36 839 A1 auch bei dieser Grillvorrichtung nicht möglich.

Aufgabe der vorliegenden Erfindung ist es daher, eine konstruktiv einfache und preiswert herzustellende Vorrichtung der eingangs genannten Art zu schaffen, die auch nachträglich noch an herkömmliche Senkrecht-Grillgeräte mit einer rotierenden Zentralstange angebracht werden kann und die bei einer kontinuierlichen Drehbewegung des Grillgutes eine schnelle und gleichmäßige Garung der zu grillenden Lebensmittel ermöglicht.

Diese Aufgabe wird erfindungsgemäß durch eine Vorrichtung nach Anspruch 1 gelöst. Vorteilhafte Ausgestaltungen und Weiterbildungen der Erfindung ergeben sich aus den abhängigen Ansprüchen.

Wesentlich bei der erfindungsgemäßen Lösung ist es, dass die Vorrichtung die folgenden Komponenten aufweist:
- eine Trägereinheit mit Befestigungsmitteln, über die die Trägereinheit an der rotierenden Stange des Senkrecht-Grills befestigt werden kann,
- mindestens zwei Spieße mit jeweils einem Aufnahmebereich, auf dem zu grillende Lebensmittel als Grillgut aufnehmbar sind, wobei die Spieße jeweils um ihre Längsachse drehbar in der Trägereinheit gelagert sind,
- ein Spießantriebselement, das relativ zur Trägereinheit frei drehbar ist, und das mit Montagemitteln versehen ist, über die das Spießantriebselement drehfest an einem feststehenden Teil des Senkrecht-Grills oder an einem relativ zum Senkrecht-Grill feststehenden Teil derart befestigt werden kann, dass es relativ zur Wärmequelle feststehend gehalten ist, und
- Getriebemittel, durch die die Spieße bei einer Drehung der Trägereinheit relativ zum Spießantriebselement beständig in eine kontinuierliche Drehbewegung um ihre eigene Längsachse angetrieben werden.

Der Hauptvorteil liegt dabei darin, dass diese Vorrichtung besonders kostengünstig hergestellt werden kann, da sie aufgrund ihrer universellen Einsetzbarkeit auch nachträglich an bereits vorhandene Senkrecht-GrillEinrichtungen mit einer rotierenden Zentralstange montiert werden kann und somit keinen eigenen Antriebsmotor benötigt. Dabei ist ein universeller Einsatz an allen auf dem Markt befindlichen Senkrecht-Grillvorrichtungen bzw. Heizeinrichtungen möglich. Von Vorteil ist es ferner, dass das Grillgut nicht nur auf einem einzigem zentralen Spieß, sondern in kleineren Portionen auf mehrere Spieße verteilt werden kann, die sich alle kontinuierlich sowohl um die eigene Längsachse als auch um die gemeinsame zentrale Achse drehen, so dass eine besonders gleichmäßige Garung und Bräunung aller Stellen des gesamten Grillgutes unter Beibehaltung des durch die abwechselnde Erhitzung und Abkühlung hervorgerufenen speziellen Geschmackseffektes erreicht werden kann. Gleichzeitig wird hierbei die insgesamt frei nach außen weisende Oberfläche des auf die einzelnen Spieße verteilten Grillgutes vergrößert, so dass insgesamt eine besonders schnelle Garung des Grillgutes erfolgt, was insbesondere im Restaurant und Imbiss-Bereich einen erheblichen Vorteil darstellt.

Die erfindungsgemäße Vorrichtung ist bei einfacher Konstruktion leicht zu montieren und einfach in der Handhabung. Sie gestattet insbesondere kleinere Mengen von Fleisch portionsweise auf einen einzelnen Spieß aufzubringen und diesen nach der gewünschten Grillzeit unabhängig von den übrigen Spießen abzunehmen und beispielsweise komplett zu servieren.

Besonders vorteilhaft ist es, wenn die Trägereinheit derart ausgebildet ist, dass eine Vielzahl von Spießen, insbesondere sechs Spieße, drehbar daran gelagert werden kann. Vorteilhafterweise können die Spieße einzeln von der Trägereinheit abgenommen sowie einzeln daran befestigt bzw. eingesetzt werden. Auf diese Weise ist die erfindungemäße Vorrichtung besonders flexibel einsetzbar.

Eine besonders einfache Ausführungsform des gleichmäßigen Antriebs der mindestens zwei Spieße kann dadurch erreicht werden, dass die Getriebemittel für die Spieße ein formschlüssig wirkende Zahnradgetriebe oder ein kraftschlüssig wirkendes Reibradgetriebe umfassen.

Vorzugsweise kann das Spießantriebselement durch ein zentrales Zahnrad gebildet sein, wobei jeder der mindestens zwei Spieße ein drehfest darauf befestigtes Ritzel aufweist, das in das zentrale Zahnrad eingreift und darauf abrollt. Der Eingriff der einzelnen Ritzel in das zentrale Zahnrad kann dabei entweder unmittelbar oder auch mittelbar über zwischengeschaltete Zwischenritzel erfolgen, wodurch die Drehrichtung und Drehgeschwindigkeit der einzelnen Spieße entsprechend beeinflusst werden kann. Insbesondere kann auch das zentrale Zahnrad koaxial auf der zentral rotierenden senkrechten Stange des Senkrecht-Grills gelagert sein und in der zu Drehrichtung der senkrechten Stange entgegengesetzten Drehrichtung angetrieben werden. Dazu kann das zentrale Zahnrad beispielsweise neben der mit den Ritzeln der einzelnen Spieße in Eingriff stehenden Außenverzahnung auch eine Innenverzahnung aufweisen, in die ein um eine relativ zur Heizeinrichtung des Senkrecht-Grills feststehende Achse rotierendes Zwischenzahnrad eingreift, welches seinerseits durch ein drehfest auf der zentralen Stange angeordnetes Zahnrad angetrieben wird.

Gemäß einer besonders bevorzugten Ausführungsform der Erfindung ist das zentrales Zahnrad fest mit einer Halterung verbunden, die an einem feststehenden Teil des Senkrecht-Grills, insbesondere an einem Haltearm zur Lagerung der rotierenden senkrechten Stange, montiert werden kann. Diese Befestigung kann besonders einfach durch Schrauben ausgeführt werden.

Besonders vorteilhaft ist es dabei, wenn die Halterung ein rohrabschnittförmiges Verbindungselement umfasst, das die zentral rotierende senkrechte Stange des Senkrecht-Grills zumindest über die Hälfte ihres Umfangs umgibt. Vor allem bei einer vollständigen Umhüllung der zentralen Stange durch ein über ihren gesamten Umfang geschlossen durchgehendes Rohrstück wird so eine sehr stabile Ausführungsform erreicht.

Gemäß einer weiteren vorteilhaften Ausführungsform der Erfindung ist vorgesehen, dass die Trägereinheit zwei in einem Abstand senkrecht übereinander angeordnete Trägerscheiben umfasst, zwischen denen der Grillgut-Aufnahmebereich der mindestens zwei Spieße drehbar gelagert werden kann. Hierdurch wird eine besonders robuste Ausführungsform erhalten.

Besonders vorteilhaft ist es dabei, wenn zumindest eine der beiden Trägerscheiben zwei voneinander beabstandete Deckplatten aufweist, zwischen denen das Spießantriebselement und die Getriebemittel, also vorteilhafterweise das zentrale Zahnrad und die darin wälzenden Ritzel der Spieße, aufgenommen sind. Vorzugsweise ist dies die obere Trägerscheibe, da dann eine besonders einfache Montierbarkeit der Vorrichtung am oberen Bereich des Senkrecht-Grills gewährleistet ist und auch nicht die Gefahr besteht, dass gegebenenfalls vom Grillgut abtropfendes Fett oder abfallende Grillgutpartikel die Getriebemittel beeinträchtigen können.

Eine besonders schnelle und einfache Entnahme und Einsetzbarkeit der einzelnen Spieße kann dadurch ermöglicht werden, dass die untere Trägerscheibe Mulden oder Lager zur Aufnahme der unteren Enden der Spieße aufweist, wobei die Mulden oder Lager vorzugsweise durch ein Federelement elastisch federnd nach oben beaufschlagt sind. Beim Einsetzen oder Entnehmen eines Spießes wird das jeweilige Federelement kurz zusammengedrückt, um dabei einen oberen Haltebereich des Spießes freizugeben.

Gemäß einer besonders bevorzugten Ausführungsform der Erfindung wird ferner vorgeschlagen, dass die obere Trägerscheibe zu ihrem Rand hin offenen Ausnehmungen aufweist, in die ein oberer Bereich der Spieße nach innen in die Trägerscheibe eingesetzt bzw. nach außen von der Trägerscheibe entfernt werden kann. Vorzugsweise verlaufen die Ausnehmungen in radialer Richtung, was eine besonders schnelle und leichte Einsetzbarkeit und Entnehmbarkeit der Spieße gewährleistet.

Besonders vorteilhaft für einen ruhigen und gleichmäßigen Lauf der Spieße ist es dabei, wenn die Spieße in ihrem oberen Bereich jeweils ein Lager, vorzugsweise ein Wälzlager, aufweisen, das form- und/oder kraftschlüssig in eine Aufnahme der oberen Trägerscheibe einsetzbar ist. Gegebenenfalls können auch zwei Lager vorgesehen sein, die jeweils in die parallelen Ausnehmungen in der oberen und unteren Deckplatte der Trägerscheibe einsetzbar sind.

Vorzugsweise ist die erfindungsgemäße Vorrichtung als universelle Nachrüstvorrichtung zur Montage an einem herkömmlichen Senkrecht-Grill für Gyros- oder Döner-Fleisch ausgebildet.

Eine besonders einfach einsetzbare Vorrichtung kann dadurch erreicht werden, dass sie eine zentrale Stange umfasst, die als senkrecht drehbare Auswechselstange in einen Senkrecht-Grill einsetzbar ist. Dabei kann die zentrale Stange vorteilhafterweise über Lager relativ zu dem Spießantriebselement gelagert sein.

Die Erfindung betrifft jedoch auch eine komplette Senkrecht-Grillvorrichtung zum Grillen von Lebensmitteln, insbesondere zum Grillen von Fleisch- oder Wurstwaren, die mindestens eine Vorrichtung der vorangehend beschriebenen Art umfasst. Insbesondere können auch mehrere erfindungsgemäße Vorrichtungen übereinander an einer zentralen senkrechten Stange eines Grills angeordnet sein, um die Anzahl der einzelnen Spieße zu vergrößern. Dabei kann die senkrecht gelagerte Stange der Senkrecht-Grillvorrichtung mindestens zwei axiale Teilbereiche aufweisen, in denen jeweils eine erfindungsgemäße Vorrichtung angeordnet ist.

Besonders vorteilhaft ist es hierbei, wenn die Grillvorrichtung eine um eine senkrechte Achse drehbar gelagerte Stange aufweist, die in einem ersten Teilbereich ihrer axialen Erstreckung als Hauptspieß zur direkten Aufnahme von Grillgut ausgebildet ist und die in einem zweiten Teilbereich ihrer axialen Erstreckung mindestens eine erfindungsgemäße Vorrichtung der vorangehend beschriebenen Art aufnimmt. Auf diese Weise kann die herkömmliche Zubereitung eines relativ dicken Grillspießes mit großem Umfang mit der gleichzeitigen Zubereitung mehrerer kleiner Grillspieße kombiniert werden.

Gemäß einer weiteren vorteilhaften Ausführungsform der Erfindung kann ferner vorgesehen sein, dass die Senkrecht-Grillvorrichtung eine um eine senkrechte Achse drehbar gelagerte Stange aufweist, die an ihrem unteren Ende fest oder entnehmbar in einer schwenkbaren Buchse gelagert ist, welche vorzugsweise um eine horizontale Achse schwenkbar ist. So kann eine besonders leichte Auswechslung oder Bestückung der drehbaren Stange erfolgen. In der Buchse können vorteilhafterweise Lagermittel vorgesehen sein, die das untere Stangen-Ende aufnehmen. Auch kann das untere Stangen-Ende insbesondere in lösbarer Weise kraftschlüssig und/oder formschlüssig in der Buchse oder in den ggf. darin vorgesehenen Lagermitteln gesichert werden.

Weitere Vorteile und Merkmale der Erfindung ergeben sich aus der nachfolgenden Beschreibung und den in den Zeichnungen dargestellten Ausführungsbeispielen.

Es zeigen:
- Figur 1:: dreidimensionale Ansicht einer ersten Ausführungsvariante einer erfindungsgemäßen Vorrichtung;
- Figur 2:: Seitenansicht der Ausführungsvariante aus Figur 1 mit beladenen Spießen;
- Figur 3:: Schnittansicht der Getriebemittel entlang der Schnittlinie A-A aus Figur 2,
- Figur 4:: dreidimensionale Ansicht der Ausführungsvariante aus Figur 1 bei abgenommener Deckplatte der oberen Trägerscheibe; und
- Figur 5:: dreidimensionale Ansicht einer zweiten Ausführungsvariante einer erfindungsgemäßen Vorrichtung, die in beladenem Zustand an einen Senkrecht-Grill montiert ist.

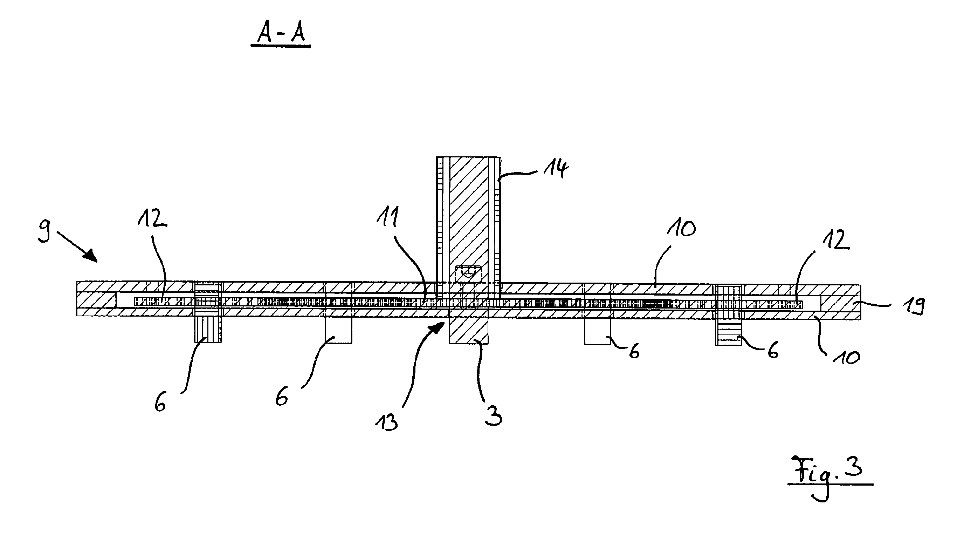

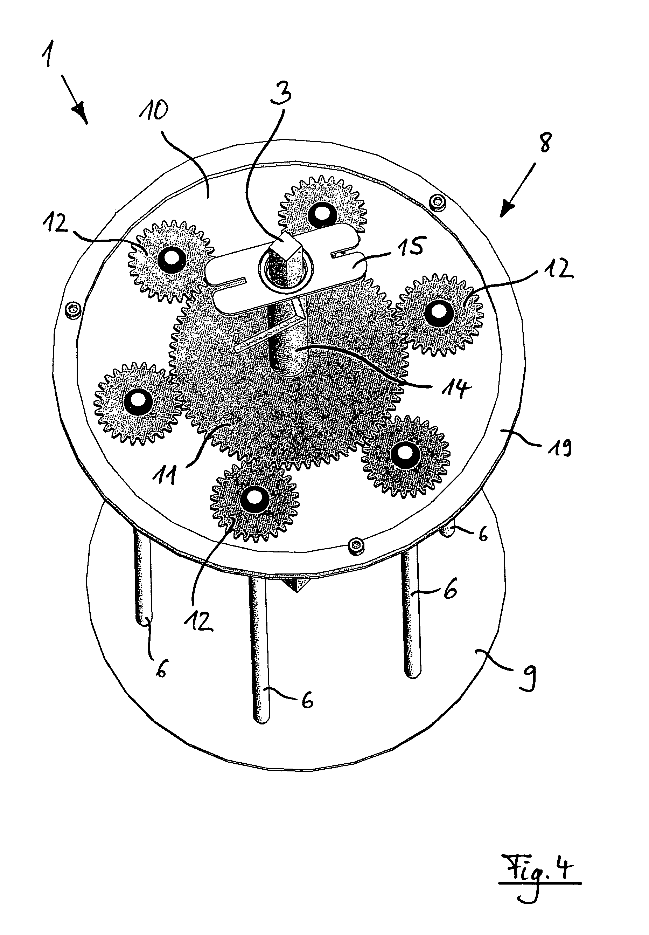

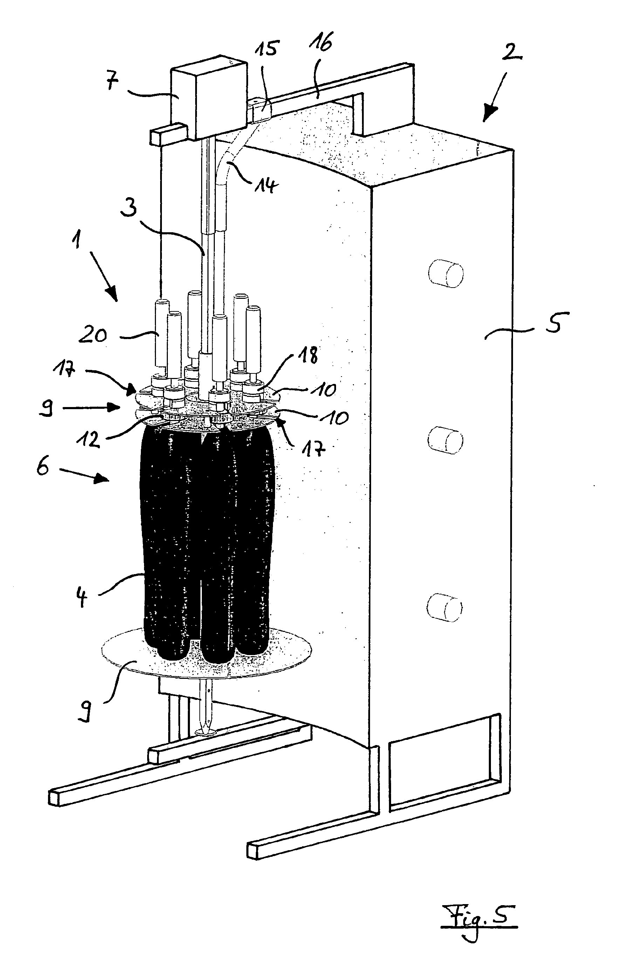

Die erfindungsgemäße Vorrichtung 1 ist zur in Figur 5 dargestellten Montage an einen Senkrecht-Grill 2 bestimmt, der eine um eine vertikale Achse rotierende zentrale Stange 3 hat. Sie dient zur Aufnahme von Grillgut 4, welches sie unter einer doppelten Rotationsbewegung um zwei parallel zueinander angeordnete Drehachsen an der Heizeinrichtung 5 des Senkrecht-Grills 2 vorbei führt.

Das Grillgut kann beispielsweise durch Wurstwaren und/oder durch Fleisch, insbesondere durch Gyros oder Döner gebildet sein. Auch ist das Grillen von Schaschlik oder Hackspießen oder anderer Lebensmittel, etwa Fisch oder Gemüse möglich.

Dazu wird das Grillgut 4 auf insgesamt sechs einzeln drehbar in der Vorrichtung 1 gelagerten Spießen 6 aufgespießt, welche in an sich bekannter Weise auch Halteelemente mit in das Grillgut 4 eingreifenden Spitzen und/oder parallele Nebenstangen aufweisen können.

Die mit einem Mehrkantprofil, insbesondere mit einem Vierkantprofil versehene zentrale Stange 3 wird von einem Antriebsmotor 7 des Senkrecht-Grills 2 drehend angetrieben. Zusammen mit der Stange 3 wird auch die erfindungsgemäße Vorrichtung 1 um die zentrale senkrechte Achse gedreht.

Zur Aufnahme der einzelnen Spieße 6 weist die Vorrichtung 1 eine Trägereinheit 8 auf, die zwei in einem solchen Abstand voneinander angeordnete Trägerscheiben 9 umfasst, dass das auf den Spießen 6 aufgespießte Grillgut dazwischen aufgenommen werden kann. Die obere Trägerscheibe 9 wiederum besteht aus zwei voneinander beabstandeten und über einen umlaufenden ringförmigen Randbereich 19 miteinander verbundenen Deckplatten 10, zwischen denen ein zentrales Zahnrad 11 als Spießantriebselement sowie sechs Ritzel 12, die drehfest mit jeweils einem der Spieße 6 verbunden sind aufgenommen sind. Das Zahnrad 11 und die darin abrollenden Ritzel 12 bilden hier zusammen Getriebemittel, über die jeder Spieß 6 bei einer Drehung der zentralen Stange 3 und damit der drehfest darauf befestigten Trägereinheit 8 kontinuierlich um ihre eigene Längsachse gedreht werden. Das formschlüssig wirkende Zahnradgetriebe 11, 12 zum Antrieb der einzelnen Spieße 6 ist besonders gut in Figur 3 zu erkennen, in der die obere Trägerscheibe bei abgenommener oberer Deckplatte 10 dargestellt ist.

Über formschlüssig wirkende Befestigungsmittel 13 ist die untere Deckplatte 10 der oberen Trägerscheibe 9 ebenso wie auch die untere Trägerscheibe 9 drehfest auf der rotierenden zentralen Stange 3 befestigt. Gleichzeitig ist das zentrale Zahnrad 11 über Montagemittel 14 und 15 drehfest an dem oberen Tragarm 16 als feststehendes Teil des Senkrecht-Grills 2 befestigt, um eine Relativbewegung zu den mit der Stange 3 rotierenden Elementen zu erzeugen. Die Montagemittel umfassen hier ein Rohrstück 14, das die drehende zentrale Stange 3 vollständig umgibt, und eine daran angeschweißte Halteplatte 15, die beispielsweise mittels in langlochartige Aussparungen einsetzbare Schrauben an dem oberen Tragarm 16 befestigt werden kann.

Die Spieße 6 können einzeln von der Trägereinheit 8 abgenommen werden, wenn das darauf aufgenommene Grillgut die gewünschte Garung bzw. den entsprechenden Bräunungsgrad erreicht hat. Dazu haben die beiden Deckplatten 10 der oberen Trägerscheibe 9 bei der in Figur 5 dargestellten Ausführungsvariante sich radial zu ihrem Rand hin erstreckende, nach außen offene Ausnehmungen 17, in die ein oberer Bereich der Spieße 6 vermittels darauf befestigter Wälzlager 18 formschlüssig und kraftschlüssig von außen nach innen in die obere Trägerscheibe 9 eingesetzt werden kann. Ebenso ist hierdurch in entsprechender Weise ein besonders einfaches Entnehmen der Spieße 6 von der Trägerscheibe 9 durch radiales Abziehen der oberen Bereiche der Spieße 6 nach außen möglich, wobei die Lager 18 auf den entnommenen Spießen 6 verbleiben, die oberhalb des Lagers 18 jeweils mit einem Griff 20 enden.

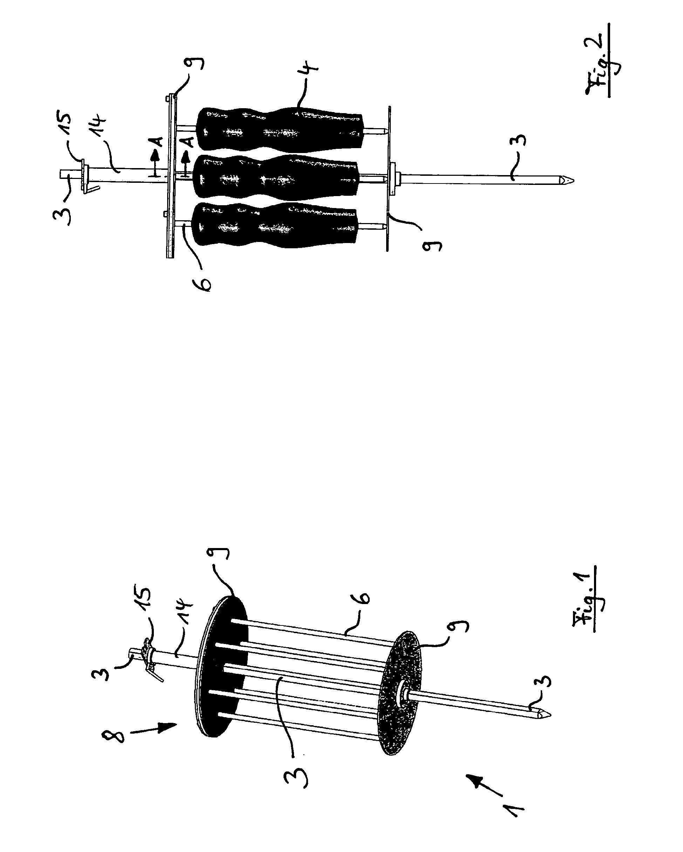

Die in den Figuren 1, 2 und 4 dargestellte erfindungsgemäße Vorrichtung 1 ist als Nachrüstvorrichtung zur nachträglichen Montage an einem herkömmlichen Senkrecht-Grill 2 ausgebildet. Dabei umfasst sie bereits eine eigene zentrale Stange 3, die gegen die ursprüngliche zentrale Stange des nachzurüstenden Senkrecht-Grills 2 ausgetauscht wird, wodurch eine besonders einfach ausführbare Nachrüstung ermöglicht wird.

## Patentansprüche

1. Vorrichtung zur Aufnahme und Führung von Grillgut (4), die geeignet ist, an einem Senkrecht-Grill (2) mit einer um eine senkrechte Achse rotierenden Stange (3) derart montiert zu werden, dass das Grillgut (4) an der Heizeinrichtung (5) des Senkrecht-Grills (2) vorbeiführbar ist, wobei die Vorrichtung (1) umfasst:
- eine Trägereinheit (8) mit Befestigungsmitteln (13) zur drehfesten Befestigung an der rotierenden Stange (3) des Senkrecht-Grills (2);
- mindestens zwei Spieße (6) mit jeweils einem Aufnahmebereich zur Aufnahme von Grillgut (4), die jeweils um ihre Längsachse drehbar von der Trägereinheit (8) getragen sind;
- ein Spießantriebselement (11), das relativ zur Trägereinheit (8) frei drehbar ist, und das Montagemittel (14, 15) zur Befestigung an einem feststehenden Teil (16) des Senkrecht-Grills (2) oder an einem relativ zum Senkrecht-Grill (2) feststehenden Teil aufweist; und
- Getriebemittel (12), durch die die Spieße (6) bei einer Drehung der Trägereinheit (8) relativ zum Spießantriebselement (11) in eine kontinuierliche Drehbewegung um ihre eigene Längsachse antreibbar sind.

2. Vorrichtung nach Anspruch 1, **dadurch gekennzeichnet, dass** mehrere, insbesondere sechs Spieße (6) drehbar an der Trägereinheit (8) gelagert sind, wobei die Spieße (6) vorzugsweise einzeln von der Trägereinheit (8) abnehmbar sind.

3. Vorrichtung nach Anspruch 1 oder 2, **dadurch gekennzeichnet, dass** die Getriebemittel für die einzelnen Spieße (6) ein formschlüssig wirkende Zahnradgetriebe (11, 12) oder ein kraftschlüssig wirkendes Reibradgetriebe umfassen.

4. Vorrichtung nach einem der Ansprüche 1 bis 3, **dadurch gekennzeichnet, dass** das Spießantriebselement durch ein zentrales Zahnrad (11) gebildet ist, und dass jeder Spieß (6) ein drehfest darauf befestigtes Ritzel (12) aufweist, das unmittelbar oder über zwischengeschaltete Zwischenritzel mittelbar in das zentrale Zahnrad (11) eingreift.

5. Vorrichtung nach Anspruch 4, **dadurch gekennzeichnet, dass** das zentrales Zahnrad (11) fest mit einer Halterung (14, 15) verbunden ist, die an einem feststehenden Teil des Senkrecht-Grills (2), insbesondere an einem Tragarm (16) zur Lagerung der rotierenden senkrechten Stange (3), befestigbar ist.

6. Vorrichtung nach Anspruch 5, **dadurch gekennzeichnet, dass** die Halterung ein schalenförmiges oder rohrförmiges Verbindungselement (14) umfasst, das die rotierende senkrechte Stange (3) des Senkrecht-Grills (2) zumindest teilweise über einen Teilbereich ihres Umfangs abdeckt oder umgibt.

7. Vorrichtung nach einem der vorherigen Ansprüche, **dadurch gekennzeichnet, dass** die Trägereinheit (8) zwei in einem Abstand senkrecht übereinander angeordnete Trägerscheiben (9) umfasst, zwischen denen der Grillgut-Aufnahmebereich der Spieße (6) drehbar lagerbar ist.

8. Vorrichtung nach Anspruch 7, **dadurch gekennzeichnet, dass** eine, vorzugsweise die obere, Trägerscheibe (9) zwei voneinander beabstandete Deckplatten (10) umfasst, zwischen denen das Spießantriebselement (11) und die Getriebemittel (12) aufgenommen sind.

9. Vorrichtung nach Anspruch 7 oder 8, **dadurch gekennzeichnet, dass** die untere Trägerscheibe (9) Mulden oder Lager zur Aufnahme der unteren Bereiche der Spieße (6) aufweist, wobei die Mulden oder Lager vorzugsweise durch ein Federelement elastisch federnd nach oben beaufschlagt sind.

10. Vorrichtung nach einem der Ansprüche 7 bis 9, **dadurch gekennzeichnet, dass** die obere Trägerscheibe (9) zur Aufnahme eines oberen Bereichs der Spieße (6) zu ihrem Rand hin offene Ausnehmungen (17) aufweist.

11. Vorrichtung nach Anspruch 10, **dadurch gekennzeichnet, dass** die Spieße (6) in ihrem oberen Bereich jeweils ein Lager (18), vorzugsweise ein Wälzlager, aufweisen, das formschlüssig und/oder kraftschlüssig in eine Ausnehmung (17) der oberen Trägerscheibe (9) einsetzbar ist.

12. Vorrichtung nach einem der vorherigen Ansprüche, **dadurch gekennzeichnet, dass** sie als Nachrüstvorrichtung (1) zur Montage an einem herkömmlichen Senkrecht-Grill (2) für Gyros- oder Döner-Fleisch ausgebildet ist.

13. Vorrichtung nach einem der vorherigen Ansprüche, **dadurch gekennzeichnet, dass** sie eine zentrale Stange (3) umfasst, die senkrecht drehbar in einen Senkrecht-Grill (2) einsetzbar ist.

14. Senkrecht-Grillvorrichtung (2) zum Grillen von Lebensmitteln (4), insbesondere zum Grillen von Fleisch- oder Wurstwaren, **dadurch gekennzeichnet, dass** sie mindestens eine Vorrichtung (1) nach einem der vorherigen Ansprüche umfasst.

15. Senkrecht-Grillvorrichtung nach Anspruch 14, **dadurch gekennzeichnet, dass** sie eine um eine senkrechte Achse drehbar gelagerte Stange (3) aufweist, die in einem ersten Teilbereich ihrer axialen Erstreckung als Hauptspieß zur direkten Aufnahme von Grillgut ausgebildet ist, wobei in einem zweiten Teilbereich ihrer axialen Erstreckung eine Vorrichtung (1) nach einem der Ansprüche 1 bis 12 aufgenommen ist.

16. Senkrecht-Grillvorrichtung nach Anspruch 14 oder 15, **dadurch gekennzeichnet, dass** sie eine um eine senkrechte Achse drehbar gelagerte Stange (3) aufweist, die an ihrem unteren Ende fest oder lösbar in einer Buchse gelagert ist, welche um eine Achse schwenkbar ist, die in einem Winkel schräg oder quer zur Längsachse der Stange (3) verläuft.
